# FASCICULE DE BREVET EUROPEEN

(11) **EP 3 626 392 B1**
(45) Date de publication et mention de la délivrance du brevet: **28.07.2021**
(21) Numéro de dépôt: 18195543.6
(22) Date de dépôt: 19.09.2018
(51) Int. Cl.: B23Q 39/02, B23Q 39/04

(54) **CENTRE D'USINAGE POUR COMPOSANTS D'HORLOGERIE**
BEARBEITUNGSZENTRUM FÜR UHRENKOMPONENTEN
MACHINING CENTRE FOR TIMEPIECE COMPONENTS

(43) Date de publication de la demande: 25.03.2020
(73) Titulaire: ETA SA Manufacture Horlogère Suisse, 2540 Grenchen (CH)
(72) Inventeur: Pham, Patric, 3427 Utzenstorf (CH); Bühler, Pierre-André, 2534 Orvin (CH)
(74) Mandataire: ICB SA

(56) Documents cités:
- EP-A1- 2 306 253
- WO-A1-2017/182839
- CH-B1- 706 794
- JP-A- S5 682 149
- US-A1- 2016 346 888

## Description

### Domaine de l'invention

L'invention concerne un centre d'usinage pour composants d'horlogerie en moyennes séries, comportant une embase fixe, sur laquelle sont superposés coaxialement plusieurs étages dont au moins l'un est mobile par rapport à ladite embase fixe, et dont chaque dit étage mobile par rapport à ladite embase fixe est indexable en position par rapport à ladite embase fixe, chaque dit étage comportant, sur sa périphérie, une pluralité de stations distinctes disposées selon un pas angulaire constant, lesdites stations comportant des unités d'usinage et/ou des préhenseurs dont les mouvements sont commandés par des moyens de pilotage, ledit centre d'usinage comportant une pluralité de postes d'usinage chacun constitué par une combinaison entre des dites stations de deux dits étages adjacents, chaque dit poste d'usinage combinant d'une part au moins une dite unité d'usinage d'une dite station de l'un desdits étages adjacents, et d'autre part au moins un préhenseur d'une autre dite station de l'autre desdits étages adjacents, et où chaque mouvement relatif entre deux positions d'indexation de deux dits étages est apte à modifier la composition de chacun desdits postes d'usinage, ledit centre d'usinage comportant, parmi lesdits étages, au moins un premier étage et un deuxième étage qui sont superposés et adjacents, dont au moins l'un desdits premier étage et deuxième étage est mobile par rapport à ladite embase fixe, ledit premier étage et ledit deuxième étage étant agencés de façon à ce que, dans toute position relative d'indexation dudit premier étage par rapport audit deuxième étage, chaque dit poste d'usinage constitué dans cette indexation comporte au moins une dite unité d'usinage appartenant à l'un desdits premier étage et deuxième étage adjacents, et au moins un dit préhenseur appartenant à l'autre desdits premier étage et deuxième étage adjacents.

L'invention concerne le domaine des machines-outils pour la fabrication de composants horlogers.

### Arrière-plan de l'invention

Le contexte de la production horlogère a changé : les très grandes séries ont disparu, et les tailles de séries sont désormais moyennes, voire petites. De ce fait, les grandes machines-transfert avec dix à quarante unités sont trop contraignantes au niveau des mises en route, par rapport à des tailles de lots petites ou moyennes, le temps de mise en route étant trop important par rapport aux temps de cycle, et de telles machines n'autorisent pas la flexibilité demandée par les marchés, qui exigent une personnalisation accrue des montres, en même temps qu'une disponibilité rapide des nouvelles fabrications.

De plus, la séparation traditionnelle entre usinages à l'outil et usinages par abrasion allonge les cycles de production, et augmente les temps de préparation.

Le document US2016/346888 A1 au nom de HUBER / DMU DENTAL décrit un dispositif d'usinage pour l'usinage de pièces dentaires, en particulier de dents artificielles et/ou d'autres pièces de rechange dentaires, au moins une pièce à usiner étant serrée dans un dispositif de maintien de pièce pouvant être entraîné en translation et rotation, autour d'un axe rotatif, et agencé pour amener cette pièce, en vue de son usinage, vers au moins une broche d'outil entraînée en rotation et à laquelle est fixé un outil, un dispositif supplémentaire porte une pluralité d'outils d'un premier côté du dispositif de maintien de pièce, et un changeur de pièces recevant les pièces à usiner, en vue de leur remplacement, est disposé de l'autre côté du dispositif de maintien de pièce.

Le document WP2017/182839 A1 au nom de METOTECNA SAGL décrit une machine transfert pour des opérations d'usinage, comprenant un bâti, une table rotative avec un mouvement d'alimentation rotatif par rapport à un axe de la machine, une pluralité d'éléments porte-pièces associés à la table rotative et espacés d'un rayon de travail donné par rapport audit axe de machine,, une pluralité de stations de travail accessibles par les éléments porte-pièces du fait du mouvement d'alimentation de la table, au moins une unité rotative apte à faire tourner un élément porte-pièce autour d'un axe respectif et par rapport à la table, dans lequel cette unité rotative comprend un ensemble moteur situé dans la base de la machine, à une distance de cet axe de machine qui est inférieure à ce rayon de travail.

Le document EP2306253A1 au nom de CITIZEN Machinery Co Ltd décrit un dispositif de contrôle d'interférence est prévu pour effectuer facilement un contrôle d'interférence d'un corps mobile, lorsqu'une pluralité de moyens de déplacement coopèrent pour déplacer ce corps mobile. Ce dispositif de contrôle d'interférence est disposé dans un appareil pourvu d'un ou de plusieurs corps mobiles capables de se déplacer dans une direction prédéterminée, et de moyens de déplacement pour déplacer le ou les corps mobiles, et comporte une pluralité de moyens de déplacement pour déplacer au moins l'un des corps en mouvement, et effectue une vérification d'interférence lorsque le corps en mouvement se déplace. Cette vérification d'interférence comprend une partie de calcul de quantité de mouvement absolu, qui synthétise la quantité de mouvement du corps en mouvement dans la même direction par la pluralité de moyens de déplacement, pour ainsi déterminer la quantité de mouvement absolue dans la direction, et comprend une partie de contrôle d'interférence qui est fournie en association avec cette partie de calcul de quantité absolue, et effectue le contrôle d'interférence à partir de la quantité de mouvement absolue.

Le document CH706794B1 au nom de BUMOTEC décrit une unité d'usinage qui comporte deux broches et des outils permettant de traiter un côté d'au moins une pièce maintenue sur une table par un porte-pièces, avec utilisation d'au moins un magasin d'outils. La table de travail est une table à mouvement en croix, qui est mobile horizontalement dans une première direction sur une première trajectoire transversale, et dans une deuxième direction sur une autre trajectoire transversale. Les broches de travail sont réglables verticalement selon une direction perpendiculaire à ces première et deuxième directions, indépendamment l'une de l'autre. Les axes de rotation verticaux des broches sont espacés horizontalement les uns des autres d'une certaine distance dans la première direction, égale ou inférieure à la moitié de la course de la table croisée dans la première direction.

### Résumé de l'invention

L'invention se propose de mettre en œuvre une machine-outil polyvalente, apte à la confection de composants d'horlogerie très variés, qui soit plus facile à mettre en œuvre que les machines antérieures, et en particulier avec des temps de réglage moindres, et autorisant des temps de cycle courts.

A cet effet, l'invention concerne un centre d'usinage selon la revendication 1.

### Description sommaire des dessins

D'autres caractéristiques et avantages de l'invention apparaîtront à la lecture de la description détaillée qui va suivre, en référence aux dessins annexés, où :

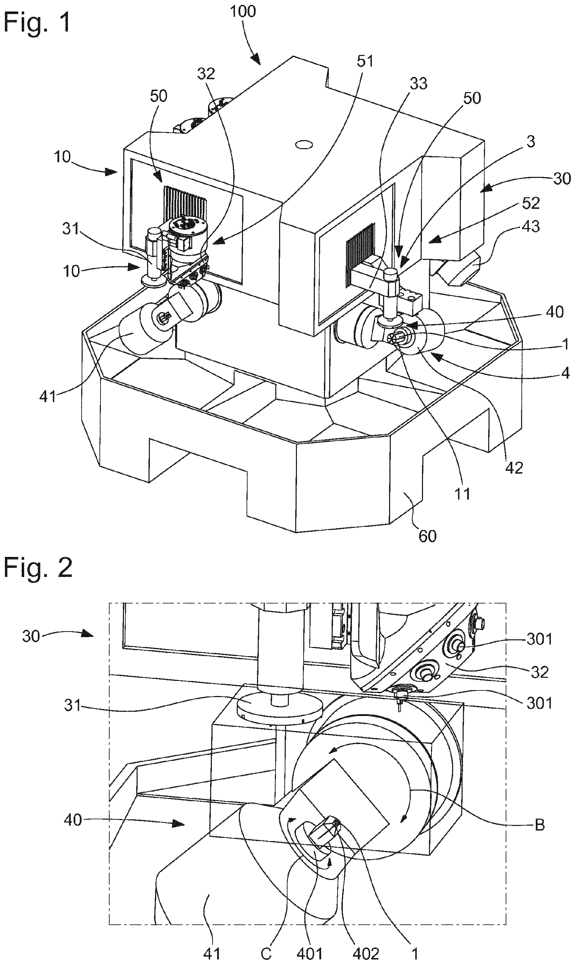

- la figure 1 représente, de façon schématisée, et en perspective, un centre d'usinage selon l'invention, comportant, au-dessus d'une embase fixe, un premier étage fixe en partie supérieure, comportant des unités d'usinage sur trois de ses quatre stations latérales supérieures dont deux sont visibles, et, entre l'embase et le premier étage, un deuxième étage mobile en rotation autour d'un axe vertical, comportant quatre stations latérales inférieures, ici chacune équipée d'un préhenseur rotatif, ou doublement rotatif; un premier poste d'usinage, et un deuxième poste d'usinage, d'agencement différent, sont visibles sur cette figure ; ce centre d'usinage est dans une position instantanée où une première station supérieure du premier étage surmonte une première station inférieure, et ainsi de suite; au cours du cycle d'usinage, les autres stations inférieures vont passer ensuite, successivement, sous la première station supérieure, et de la même façon les coopérations sont incrémentées d'un pas à chaque rotation du deuxième étage inférieur ;
- la figure 2 représente, de façon similaire à la figure 1, et au même instant que la figure 1, un détail du premier poste d'usinage où coopèrent cette première station supérieure, laquelle comporte un disque de diamantage à axe vertical, et une tourelle oblique d'usinage à l'outil, et une première station inférieure, avec un préhenseur birotatif combinant un axe B et un axe C qui se croisent sensiblement au niveau de la zone à usiner ; le prisme rectangulaire représente le volume usinable ;

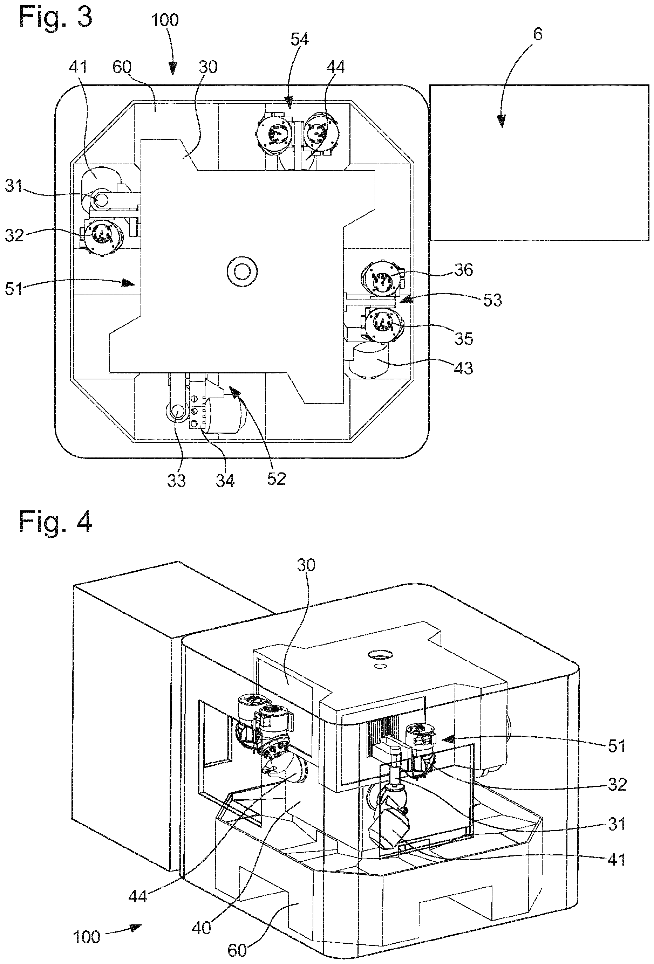

- la figure 3 représente, de façon schématisée et en vue de dessus, le centre d'usinage de la figure 1, et au même instant que la figure 1, dans la même position relative du premier étage supérieur et du deuxième étage inférieur ; dans cette configuration particulière et non limitative, le premier étage supérieur ne comporte que trois stations supérieures occupées par des unités d'usinage : la première et la deuxième stations supérieures visibles sur la figure 1, et une troisième station supérieure sur la face opposée à la première station, et qui comporte deux barillets obliques d'usinage à l'outil ; la quatrième station supérieure, opposée à la deuxième station, ne comporte pas d'unité d'usinage, ce qui autorise l'insertion d'un manipulateur pour effectuer un contrôle et/ou un échange de pièce dans la broche du préhenseur du deuxième étage inférieur seul visible sous cette quatrième station supérieure ; une zone externe d'alimentation visible en partie droite de la figure permet les échanges de pièces et/ou d'outils avec la zone machine ;
- la figure 4 montre, de façon similaire à la figure 1, et au même instant que la figure 1, une autre vue, où sont visibles le premier poste, le quatrième poste, et la zone externe d'alimentation ;

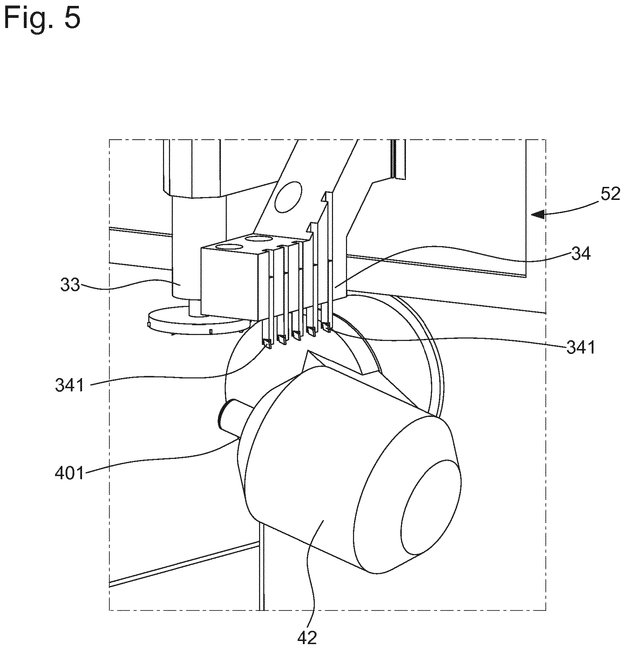

- la figure 5 illustre, de façon similaire à la figure 2, et au même instant que la figure 1, le deuxième poste d'usinage, qui comporte deux unités d'usinage en deuxième station supérieure : une meule, et un support fixe comportant des burins de tournage, agencés pour tourner la pièce maintenue en pince dans une broche portée par le préhenseur de l'étage inférieur, qui est du type birotatif ;

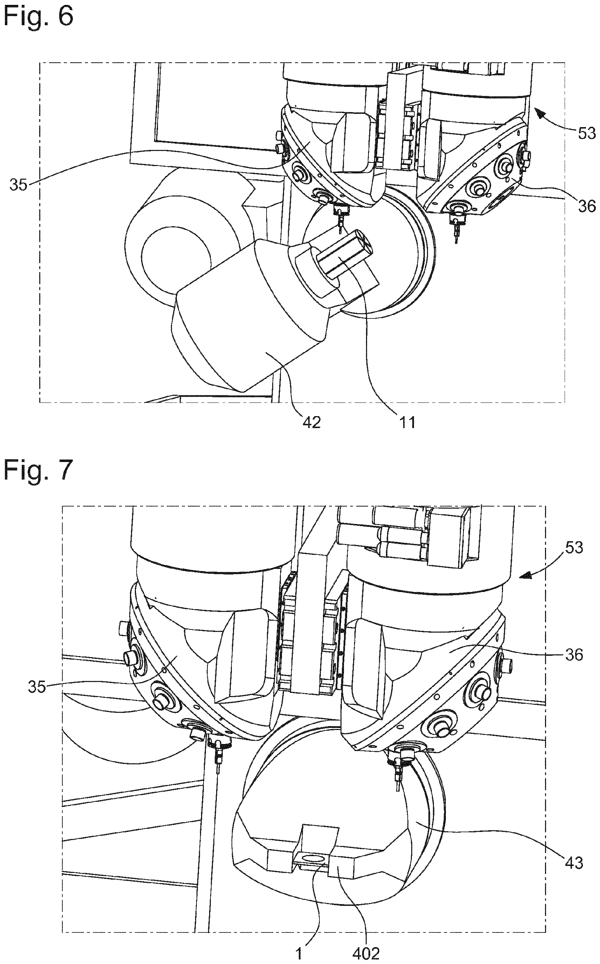

- la figure 6 illustre, de façon similaire à la figure 2, mais à un autre instant postérieur à celui de la figure 1, un troisième poste d'usinage, qui comporte deux unités d'usinage en troisième station supérieure, chacune constituée par une tourelle d'usinage à l'outil, qui coopère avec un préhenseur inférieur birotatif ;
- la figure 7 est similaire à la figure 6, et montre un troisième poste d'usinage, et au même instant que la figure 1, et dans une configuration différente de la figure 6, où les deux mêmes unités d'usinage en troisième station supérieure, coopèrent avec un autre préhenseur inférieur qui est rotatif et comporte une pince à mâchoires porteuse de la pièce à usiner, qui est ainsi usinable recto-verso ou sur une tranche;

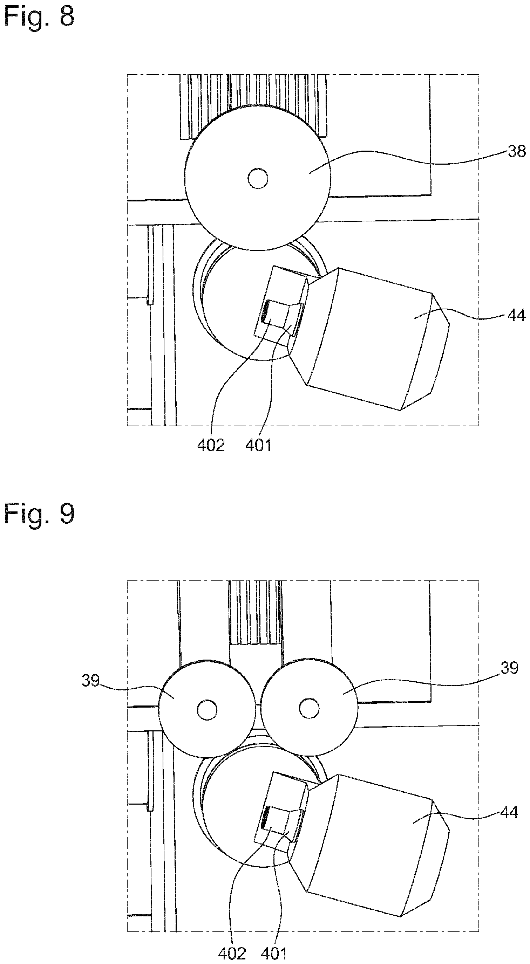

- la figure 8 illustre, de façon similaire à la figure 2, un autre centre d'usinage que celui des figures précédentes, ou du moins comportant un équipement différent d'une de ses stations supérieures, avec une meule d'axe horizontal agencée pour coopérer avec un préhenseur de l'étage inférieur, du type birotatif ;
- la figure 9 illustre une variante de la figure 8, avec une station supérieure, comportant deux meules d'axe horizontal, chacune agencée pour coopérer avec un préhenseur de l'étage inférieur, du type birotatif ;

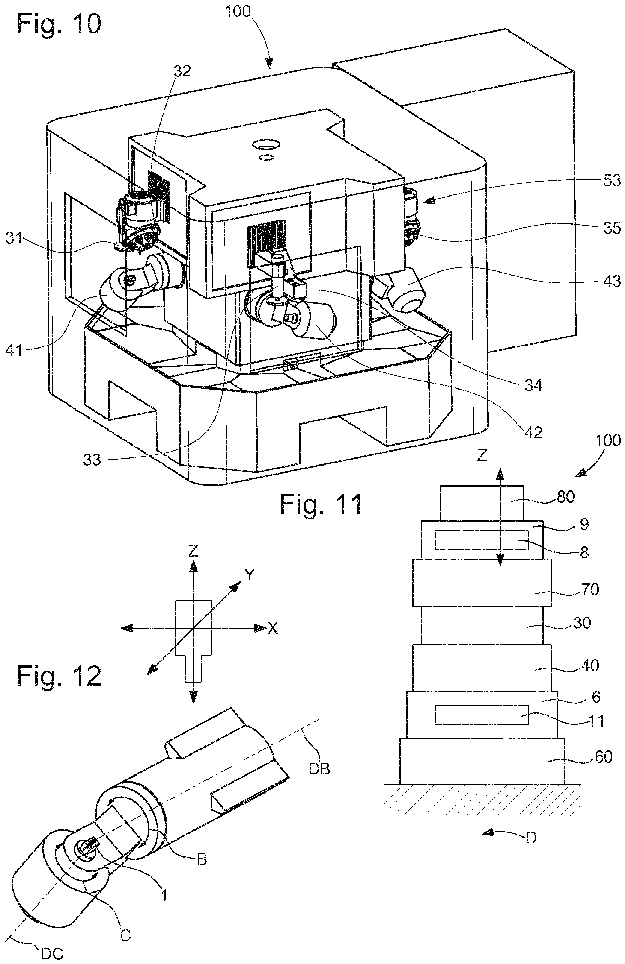

- la figure 10 est une vue similaire à la figure 1, tournée d'un quart de tour ;
- la figure 11 est un schéma en vue de côté illustrant un centre d'usinage dont les différentes fonctions sont assurées à des niveaux différents, empilés l'un sur l'autre, de façon sensiblement coaxiale : du bas vers le haut, l'embase fixe formant le bâti de la machine, puis une station d'automation pour le contrôle et/ou l'échange de pièces, puis un deuxième étage inférieur, puis un premier étage supérieur, puis un troisième étage supérieur de même type que le deuxième étage inférieur, puis une station de contrôle et/ou changement d'outils et/ou de diamantage de meules, puis un magasin d'outils ;
- la figure 12 est un schéma illustrant l'agencement relatif des cinq axes de travail dans l'espace ;

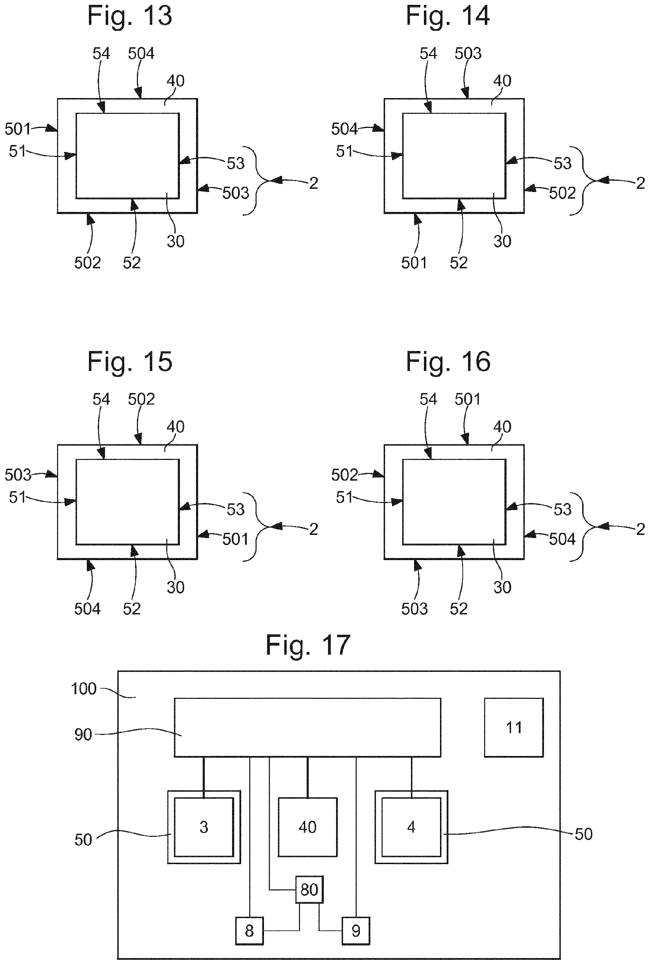

- les figures 13 à 16 illustrent, pas par pas, le changement de coopération entre les stations de l'étage inférieur qui sont mobiles, avec les stations de l'étage supérieur qui sont fixes ;
- la figure 17 est un schéma-blocs représentant certains éléments fonctionnels du centre d'usinage.

### Description détaillée des modes de réalisation préférés

L'invention concerne un centre d'usinage 100 pour composants d'horlogerie en moyennes séries.

Ce centre d'usinage comporte une embase fixe 60, sur laquelle sont superposés, sensiblement coaxialement, plusieurs étages 10.

Au moins un de ces étages est mobile par rapport à l'embase fixe 60, comme dans la plupart des machines-transfert.

Chaque étage 10 qui est mobile par rapport à l'embase fixe 60 est indexable en position par rapport à cette embase fixe 60, notamment indexable en position angulaire.

Chaque étage 10 comporte, sur sa périphérie, une pluralité de stations 50 distinctes, qui sont disposées selon un pas angulaire constant. Par exemple l'étage 10 comporte des facettes, sur lesquelles sont agencées les différentes stations : quatre stations sur un cube ou similaire, six stations sur un prisme de section hexagonale, ou autre. De façon plus particulière, chaque station s'étend de façon sensiblement plane, selon un plan définissant deux axes linéaires. Plus particulièrement encore, ce plan est sensiblement vertical, ou vertical. On connaît aussi des mécanismes en tourelles, apparus sur les premiers centres d'usinage des années 1960 et 1970, qui toutefois limitent les possibilités de course des unités qu'elles portent, tandis qu'une structure à facettes planes autorise pratiquement tous les degrés de liberté, et permet de concevoir, facilement, des moyens d'usinage à quatre, cinq axes, ou davantage. Si dans la pratique on sait réaliser des centres d'usinage comportant six à huit axes, on se heurte très vite à la difficulté de la gestion des collisions, qui doit prendre en compte le mouvement sur chaque axe, et l'encombrement des pièces en cours d'usinage et des outils ; de plus il est délicat d'assurer une lubrification efficace de la zone de coupe.

On remarque que, si les stations 50 sont agencées, au niveau de chaque étage avec un pas constant, ce pas n'est pas nécessairement égal d'un étage à l'autre. Il peut notamment être multiple, sous-multiple, ou autre. L'invention est ici illustrée dans le cas particulier et non limitatif de pas angulaires égaux au niveau des différents étages.

L'invention est illustrée ici dans le cas non limitatif d'usinages cinq axes, on comprend qu'il n'existe pas de limitation constructive au nombre d'axes, si ce n'est au niveau des faisceaux électriques, hydrauliques et pneumatiques, qui imposent des limitations de fait des courses angulaires et linéaires.

Ces stations 50 comportent des unités d'usinage 3, et/ou des préhenseurs 4, dont les mouvements sont commandés par des moyens de pilotage 90 que comporte le centre d'usinage 100 pour piloter tous les mouvements et moteurs d'axes, les moteurs de broche, les systèmes de changement d'outil, de diamantage, et similaires, les durées de vie d'outil, les systèmes de mesure d'outil et de pièces usinées, les moyens de mesure d'effort, les systèmes anti-collisions, les moyens de manutention notamment les changeurs de pièces et de palettes éventuels, les moyens de lubrification, et toutes les servitudes classiques d'une machine-outil d'usinage.

Un préhenseur 4 est agencé pour maintenir au moins un composant à usiner, et/ou à contrôler, pendant son usinage et/ou son contrôle, soit directement, soit par l'intermédiaire d'au moins un posage.

Le centre d'usinage 100 comporte une pluralité de postes d'usinage 2. Tel que visible sur les figures 13 à 16, chaque poste d'usinage 2 est en fait une configuration non permanente, qui résulte d'un positionnement relatif de différentes stations 50 qui font face l'une à l'autre pendant une durée limitée qui doit permettre l'exécution de la plus longue opération d'usinage sur le centre d'usinage 100, et qui permet la réalisation d'un type particulier d'usinage en relation avec un posage particulier.

On notera que le terme « usinage » est à interpréter largement, puisqu'il peut comporter des opérations autres que les traditionnelles coupe et abrasion, et en particulier des usinages ou soudages laser, des collages, des sertissages, ou autres.

Chaque poste d'usinage 2 est ainsi constitué par une combinaison, temporaire, entre des stations 50, 51, 52, 53, 54, 501, 502, 503, 504, de deux étages 10 adjacents. Le mouvement d'un étage 10 mobile, en particulier une rotation, est ainsi apte à modifier le positionnement relatif des stations en présence, et substitue, au même emplacement géométrique dans l'espace, un nouveau poste d'usinage 2 au précédent.

Selon le type de production à effectuer, le mouvement relatif des étages peut permettre, ou bien de substituer à un poste d'usinage 2 selon une composition particulière, un autre poste d'usinage de même composition, ou bien de lui substituer un poste d'usinage avec une autre composition, le poste d'usinage 2 est alors à composition variable : au moins un mouvement relatif entre deux positions d'indexation de deux étages 10 est alors apte à modifier la composition de chacun des postes d'usinage 2 pour obtenir au moins deux compositions distinctes de ces postes d'usinage 2. Naturellement, il est possible d'agencer le centre d'usinage 2 de façon à panacher ces deux modes de composition des postes d'usinage, de façon à avoir, dans un même cycle de production, certains postes d'usinage identiques entre eux, et d'autres qui sont différents.

Par « cycle » on entend ici le parcours d'un produit à usiner sur plusieurs postes d'usinage 2 successifs, obtenu par la rotation d'au moins un étage 10 par rapport à l'embase 60. Selon le travail à effectuer, l'usinage complet peut nécessiter un parcours de ce produit sur la totalité des postes d'usinage 2 constituables, ou une partie seulement. Certains postes d'usinage 2 peuvent être dupliqués à l'identique, dans le but d'équilibrer le temps de transit dans chaque position angulaire, avec la durée la plus faible possible.

Bien entendu, le produit à usiner, assemblé sur un posage du préhenseur 4, ou sur le préhenseur 4 lui-même, n'est pas nécessairement unique: il peut s'agir d'une panoplie de composants. Cette panoplie peut comporter plusieurs composants identiques pour la même opération, ou plusieurs composants identiques mais pour des opérations différentes sur le même poste d'usinage comme des usinages recto-verso, ou encore des composants différents, l'objectif étant de rentabiliser la production du centre d'usinage, tout en équilibrant la durée d'usinage sur chaque poste de travail 2. Plus particulièrement, chaque pièce à usiner est chargée/poussée dans un serrage, et le tout sur un tasseau qui s'indexe dans la broche.

Chaque poste d'usinage 2 combine d'une part au moins une unité d'usinage 3 d'une station 50 de l'un de ces étages 10 adjacents, et d'autre part au moins un préhenseur 4 d'une autre station 50 de l'autre des étages 10 adjacents.

Et chaque mouvement relatif entre deux positions d'indexation de deux étages 10 modifie la composition de chacun des postes d'usinage 2.

Ce centre d'usinage 100 comporte, parmi les étages 10, au moins un premier étage 30 et un deuxième étage 40 qui sont superposés et adjacents, dont au moins l'un des premier étage 30 et deuxième étage 40 est mobile par rapport à l'embase fixe 60. Le premier étage 30 et le deuxième étage 40 sont agencés de façon à ce que, dans toute position relative d'indexation du premier étage 30 par rapport au deuxième étage 40, chaque poste d'usinage 2 constitué dans cette indexation comporte au moins une unité d'usinage 3 appartenant à l'un de ces deux étages 30 et 40 adjacents, et comporte au moins un préhenseur 4 appartenant à l'autre de ces deux étages 30 et 40 adjacents.

Chaque préhenseur 4 a au moins un degré de liberté en rotation par rapport à l'étage qui le porte.

Plus particulièrement, dans une configuration avantageuse, dans chaque étage 10 comportant au moins un préhenseur 4, au moins un préhenseur 4 a au moins deux degrés de liberté en rotation par rapport à l'étage 10 qui le porte. Plus particulièrement encore, dans chaque étage 10 comportant au moins un préhenseur 4, chaque préhenseur 4 a au moins deux degrés de liberté en rotation par rapport à l'étage 10 qui le porte.

Dans une configuration particulière du centre d'usinage 100, au moins le premier étage 30 et le deuxième étage 40 sont chacun mobile par rapport à l'embase fixe 60.

Cette configuration permet de réduire le retour à vide en fin de cycle, imposé par les différents faisceaux technique, tel qu'exposé plus haut, et notamment si ces deux étages se meuvent en sens inverse l'un de l'autre.

Naturellement, ce qui est exposé ici de façon simplifiée avec deux étages seulement, un premier étage 30 et le deuxième étage 40, est extrapolable à un nombre d'étages supérieur. On peut, par exemple, imaginer un étage intermédiaire ne comportant que des préhenseurs 4, intercalé entre deux étages comportant des unités d'usinage 3, conçues pour usiner de part et d'autre les pièces que portent les préhenseurs de l'étage intermédiaire. Les seules vraies limitations sont celles dues aux fournitures de fluides techniques, et aux fournitures de moyens propres à l'usinage, en particulier outils et lubrifiants.

Selon l'invention, et de façon avantageuse, en particulier pour des usinages en reprise, au moins une station 50 comporte à la fois au moins une unité d'usinage 3 et au moins un préhenseur 4. Et, de préférence, au moins une station d'un étage adjacent et antagoniste comporte également au moins une unité d'usinage 3 et au moins un préhenseur 4, ce qui autorise un déchargement d'une pièce ébauchée, pour l'usinage en reprise de la zone par laquelle elle était maintenue dans son préhenseur initial.

Plus particulièrement, dans au moins un étage 10, au moins une unité d'usinage 3 est mobile en position par rapport à l'étage 10 qui la porte. Plus particulièrement encore, dans au moins un étage 10, chaque unité d'usinage 3 est mobile en position par rapport à l'étage 10 qui la porte. Plus particulièrement encore, dans tout étage 10 comportant au moins une unité d'usinage 3, chaque unité d'usinage 3 est mobile en position par rapport à l'étage 10 qui la porte.

Plus particulièrement, dans au moins un étage 10, au moins un préhenseur 4 est mobile en position par rapport à l'étage 10 qui le porte. Plus particulièrement encore, dans au moins un étage 10, chaque préhenseur 4 est mobile en position par rapport à l'étage 10 qui le porte. Plus particulièrement encore, dans tout étage 10 comportant au moins un préhenseur 4, chaque préhenseur 4 est mobile en position par rapport à l'étage 10 qui le porte.

De façon particulière, au moins une station 50 comporte plusieurs unités d'usinage 3, dont les courses se recouvrent, et les moyens de pilotage 90 sont agencés pour piloter chacune d'entre elles de façon à éviter toute collision avec les autres et les outils qu'elles portent. Une de ces unités 3 peut, ainsi, poursuivre un usinage commencé par une autre unité 3 de la même station 50 pendant l'exécution d'un cycle de changement d'outil, ou de mesure d'outil, ou de diamantage, ou autre, de l'unité d'usinage 3 qui a commencé le travail d'usinage ; et celle-ci peut reprendre le travail d'usinage pendant que la deuxième unité bénéficie à son tour d'une assistance technique. Ainsi l'usinage sur la pièce à usiner n'est pas, ou très peu, interrompu pendant la présence du préhenseur portant cette pièce face à cette station 50 qui porte plusieurs unités d'usinage 3.

Dans une variante, dans une telle station 50 comportant plusieurs unités d'usinage 3 dont les courses se recouvrent, certaines de ces unités d'usinage 3 sont indépendantes les unes des autres, et, plus particulièrement, ont des guidages distincts.

Dans une autre variante, dans une telle station 50 comportant plusieurs unités d'usinage 3 dont les courses se recouvrent, plusieurs unités d'usinage 3 utilisent les mêmes guidages.

Le centre d'usinage 100 comporte avantageusement, parmi, ou en plus des postes d'usinage 2, au moins une station d'automation 6 pour le chargement ou le déchargement de composants à usiner ou usinés. Plus particulièrement, au moins une telle station d'automation 6 constitue tout ou partie d'un des étages 10. Plus particulièrement encore, au moins une telle station d'automation 6 est une partie, ou la totalité, d'un étage 10 mobile par rapport à l'embase fixe 60.

Pour revenir aux étages 10 qui sont mobiles par rapport à l'embase fixe 60, les figures illustrent des étages tous coaxiaux et mobiles en rotation, sensiblement autour d'un même axe vertical, par rapport à l'embase fixe 60, ce cas particulier n'empêche nullement d'autres configurations où au moins un des étages est en rotation autour d'un axe horizontal, comme le sont souvent les magasins d'outils de centres d'usinage horizontaux, ce peut être la configuration des servitudes d'usinage ; approvisionnement en pièces, en outils, mesure pièce, mesure outil, diamantage, et autres. Le centre d'usinage 100 peut aussi avoir une structure complexe de type « Rubik's cube » avec des mouvements de rotation croisés.

Dans une exécution particulière, les moyens de pilotage 90 sont agencés pour piloter les stations 50 de façon à faire passer successivement chaque unité d'usinage 3 et/ou chaque préhenseur 4 devant un point fixe au voisinage d'une embase fixe 60 que comporte le centre d'usinage 100, laquelle peut être l'embase fixe porteuse des étages 10, ou une autre embase disposée latéralement de façon à dégager l'espace autour des zones de travail pour permettre la surveillance par un opérateur.

Plus particulièrement, quand des opérations de rectification sont à effectuer, le centre d'usinage 100 comporte au moins une station de diamantage 8, qui est agencée pour procéder en temps masqué au diamantage de meules ou d'outils portés par une des unités d'usinage 3. Plus particulièrement, la station de diamantage 8 est distincte des unités d'usinage 3.

Dans une variante particulière, le centre d'usinage 100 comporte au moins une station d'usinage à l'outil diamant, qui est agencée pour diamanter une pièce maintenue dans un préhenseur 4.

Avantageusement, le centre d'usinage 100 comporte au moins une station de changement d'outil 9, qui est agencée pour procéder en temps masqué à l'échange de meules ou d'outils portés par une des unités d'usinage 3. Plus particulièrement, la station de changement d'outil 9 est distincte des unités d'usinage 3. La station de changement d'outil 9 est avantageusement agencée pour coopérer avec un magasin d'outils 80, que comporte le centre d'usinage 100, et qui peut constituer un des étages 10. Plus particulièrement, la station de changement d'outil 9 est un étage 10 mobile par rapport à l'embase fixe 60.

Dans une configuration particulière, au moins une unité d'usinage 3 comporte au moins un outil fixe 341, et est agencée pour coopérer avec au moins un préhenseur 4 d'un étage adjacent au sien, lequel préhenseur 4 est mobile selon au moins un degré de liberté par rapport à la station 50 qui le porte ; il est ainsi possible de réaliser des opérations de tournage, alésage, tourillonnage, ou similaire.

Avantageusement, au moins un préhenseur 4 comporte au moins une broche 401 pour l'entraînement d'un composant à usiner à sa vitesse d'usinage.

Plus particulièrement, au moins un préhenseur 4 comporte au moins une pince 402 pour le maintien avec serrage d'un composant à usiner, pour autoriser son usinage, ou encore son usinage recto-verso quand la pince est à mâchoires comme sur la figure 8.

Plus particulièrement, au moins une unité d'usinage 3 comporte une pluralité de broches 301 aptes à l'usinage d'un même composant fixé sur un préhenseur 4 avec minimisation du temps de changement d'outil.

De façon avantageuse, le centre d'usinage 100 comporte, en plus des postes d'usinage 2, au moins une station de contrôle 11 pour le contrôle géométrique des composants usinés et/ou des outils utilisés. Plus particulièrement, cette station de contrôle 11 constitue un des étages 10. Plus particulièrement encore, cette station de contrôle 11 est un étage 10 mobile par rapport à l'embase fixe 60.

Les moyens de pilotage 90 sont de préférence agencés pour corriger les trajectoires et/ou les correcteurs dynamiques d'outils, et/ou pour gérer des remplacements d'outils, voire pour stopper le cycle d'usinage, en fonction des informations en provenance de cette station de contrôle 11.

Le centre d'usinage 100 comporte au moins une centrale de lubrification et de filtration apte à filtrer les résidus d'au moins un type d'usinage, notamment de rectification, de diamantage, et de satinage. Dans le cas où des opérations de différentes natures sont à effectuer, les circuits de lubrification et de filtration peuvent être séparés, selon les lubrifiants à utiliser, dans des zones géométriques distinctes : un circuit pour l'usinage à l'outil coupant, un autre circuit pour l'usinage à l'abrasif.

Plus particulièrement, les étages 10 qui sont mobiles par rapport à l'embase fixe 60 sont mobiles en rotation coaxiale autour d'un axe unique. Plus particulièrement, cet axe unique est vertical.

Les figures illustrent une variante particulière, non limitative, comportant quatre postes d'usinage, combinant chacun deux zones 50, d'un premier étage supérieur 30 statique, et d'un deuxième étage 40 inférieur dynamique.

Dans une variante particulière, le centre d'usinage 100 comporte quatre postes: trois réservés à l'usinage, et un quatrième d'usinage conçu pour l'usinage et/ou pour l'automation. Le nombre de postes d'usinage opérationnels dépend du temps de cycle élémentaire, de la décomposition du temps de cycle global, et du temps de manipulation de la pièce.

Dans la variante illustrée, chaque poste de travail combine :
- trois degrés de liberté en translation, selon les axes X-Y-Z, plus particulièrement au niveau des unités d'usinage 3 ;
- au moins un degré de liberté en rotation, notamment axe C, ou encore axe B, ou bien deux degrés de liberté en rotation, selon les axes C et B ; plus particulièrement les degrés de liberté en rotation sont au niveau du préhenseur 4.

Naturellement, en plus de cette configuration minimale, une unité d'usinage 3 peut comporter un ou plusieurs degrés de liberté en rotation, comme un préhenseur 4 peut comporter encore un ou plusieurs degrés de liberté en translation. Certains de ces degrés de liberté supplémentaires, notamment en translation, peuvent être des semi-axes, pour effectuer une palettisation en butée sur des positions extrêmes sans arrêt sur des positions intermédiaires, ou une rotation d'un plateau entre des positions indexées sans arrêt sur des positions intermédiaires.

Sur la machine de transfert ainsi illustrée, tout le deuxième étage 40, comportant les diviseurs s'indexe, de station en station.

En raison des liaisons flexibles, la rotation de chaque étage mobile est nécessairement limitée angulairement. De façon pratique, cette limitation angulaire est fixée à une valeur raisonnable, notamment 360°, et, tous les 360° la machine doit, après l'achèvement d'un cycle, se rembobiner sur un tour pour se remettre dans une configuration de départ d'un nouveau cycle.

Une telle distribution des axes permet une construction rigide, avec de très courtes boucles de force.

Cette compacité autorise des boucles de force courtes, et permet d'avoir des pièces structurelles rigides, conjuguées avec une cinématique facile à protéger.

La configuration retenue permet différentes possibilités d'outillage, et en particulier, en plus des configurations les plus usuelles :
- une station avec disque de diamantage et avec tourelle d'outils, notamment aptes à de l'usinage à grande vitesse traditionnel;
- station avec peigne de tournage avec burins fixes, emplacements pour broches haute fréquence, et un disque de diamantage.

De manière générale, l'utilisation d'une table rainurée permet un équipement avec différents types d'outils, voire de combinaisons d'outils, tant qu'il n'y a pas de collisions lors de l'usinage.

La possibilité d'équiper la machine avec différents outils/broches/burins sur une machine de transfert de taille moyenne rend le concept intéressant pour différentes applications horlogères.

L'emploi d'un nombre de posages pair (notamment quatre) permet un concept d'usinage selon lequel où on travaille les six faces de la pièce en reprise (par exemple deux fois sur un premier posage sur face A, deux fois sur un deuxième posage sur face B), en faisant deux passages à travers la machine.

La machine permet encore une application pour l'usinage d'ébauches horlogères, avec la possibilité de tourner la pièce en utilisation de l'axe C pour usiner les deux faces en un seul serrage, ainsi que l'usinage sur la tranche, et avec la possibilité de masquer le temps de changement d'outil avec le principe double-broche.

L'application à la rectification, dite aussi meulage, peut se faire avec une meule unique, par exemple de diamètre 300mm, ou bien avec plusieurs meules plus petites, par exemple deux meules de diamètre 200mm.

Le centre d'usinage illustré présente bien des avantages en ce qui concerne le process:
- l'usinage avec 5 axes CNC, et plus particulièrement 5 axes continus. De préférence les deux rotations sont centrées dans le centre de la pièce: ainsi il y peu de mouvements de compensation à faire ;
- de nouvelles possibilités sont offertes pour des usinages et en particulier des usinages de décors, notamment de type guillochage ou similaire, sont possibles grâce à l'usinage 5 axes et au changement d'outil, réalisable facilement même pour une tourelle à outils multiples;
- grand nombre d'outils utilisables, et grande diversité des opérations possibles grâce aux trois, voire quatre, stations d'usinage.

D'autres avantages concernent le service et l'utilisation de la machine :
- facilité de récupération des matières premières, chute des copeaux ;
- accès aisé pour l'utilisateur-régleur, réglage facilité.

Les avantages en termes de productivité, grâce aux trois stations d'usinage et la station pour la charge/décharge sont d'autant meilleurs que le temps de passage est équilibré sur chacune des stations.

D'autres avantages concernent la conception des outillages, facilitée si on standardise des tables X-Z, avec une matrice de taraudages et/ou une matrice de rainurage en té, afin de permettre une grande modularité sur l'outillage.

La machine reste suffisamment polyvalente, pour permettre d'autres types d'usinage que ceux pour lesquels la machine est conçue.

Le centre d'usinage 100 selon l'invention est plus particulièrement conçu pour des travaux à partir d'un brut, ou en reprise. Toutefois, au moins un étage 10 porteur d'unités d'usinage 3 peut être muni d'un avance-barres, ou bien d'un ravitailleur de mini-barres, de longueur proche de celle de la broche, au niveau d'une de ces unités d'usinage 3, ce qui suppose que l'unité d'usinage correspondante 3 soit fixe. De préférence cet avance-barres est unique, car, s'il est en théorie possible d'implanter alors plusieurs unités d'usinage 3 avec une telle alimentation par avance-barres, l'emprise au sol est alors très fortement augmentée, ce qui réduit un des avantages de cette machine, qui est sa compacité. Plus particulièrement, cet avance-barres est fixé à l'embase 60.

L'avantage d'un centre d'usinage tel que décrit et illustré est l'usinage complet de composants terminés, sans reprise.

Dans une variante particulière de mise en œuvre, cet usinage est réalisé en un seul serrage, avec travail uniquement sur cinq faces.

Dans une autre variante particulière de mise en œuvre, cet usinage est réalisé avec retournement de pièce, et changement de serrage, pour usinage sur l'ensemble de ce composant, sur toutes ses faces.

Le centre d'usinage selon l'invention autorise des temps opératoires très courts. De ce fait le cycle d'alimentation en bruts à usiner et de déchargement des composants usinés est loin d'être négligeable devant les temps d'usinage sur chacun des postes de travail 2, et devant le temps du cycle complet, et cette durée de charge/décharge peut dans certains cas constituer le temps menant du cycle global. On peut estimer les différents temps de cycle élémentaires dans une fourchette de 10 à 15 secondes environ, ce qui incite à augmenter le nombre de composants au niveau de chaque préhenseur, et/ou de faire coopérer une même unité d'usinage 3 avec deux préhenseurs 4 distincts, par exemple au niveau de deux étages 10 distincts, situés de part et d'autre de l'étage comportant cette unité d'usinage, l'un inférieur, et l'autre supérieur.

En somme, l'originalité de cette machine réside dans la combinaison entre :
- le nombre de postes de travail, qui est relativement réduit, quatre dans l'exemple illustré par les figures ;
- la disposition des axes machine, avec une cinématique avantageuse en raison de la proximité des unités d'usinage et des préhenseurs, qui permet de réduire drastiquement les courses à vide ;
- la polyvalence pour la réalisation d'applications horlogères très différentes par simple échange des outillages : diamantage, tournage-fraisage, meulage, et autres.

L'invention permet l'augmentation des performances dans différentes applications horlogères, tout en permettant de standardiser les équipements de production. De plus, à travers son nombre de postes relativement modeste, cette machine est plus adaptée aux lots de production actuels en horlogerie qu'aux grandes séries d'autrefois.

## Revendications

1. Centre d'usinage (100) pour composants d'horlogerie en moyennes séries, comportant une embase fixe (60), sur laquelle sont superposés coaxialement plusieurs étages (10) dont au moins l'un est mobile par rapport à ladite embase fixe (60), et dont chaque dit étage (10) mobile par rapport à ladite embase fixe (60) est indexable en position par rapport à ladite embase fixe (60), chaque dit étage (10) comportant, sur sa périphérie, une pluralité de stations (50) distinctes disposées selon un pas angulaire constant, lesdites stations (50) comportant des unités d'usinage (3) et/ou des préhenseurs (4) dont les mouvements sont commandés par des moyens de pilotage (90), ledit centre d'usinage (100) comportant une pluralité de postes d'usinage (2) chacun constitué par une combinaison entre des dites stations (50) de deux dits étages (10) adjacents, chaque dit poste d'usinage (2) combinant d'une part au moins une dite unité d'usinage (3) d'une dite station (50) de l'un desdits étages (10) adjacents, et d'autre part au moins un préhenseur (4) d'une autre dite station (50) de l'autre desdits étages (10) adjacents, et où chaque mouvement relatif entre deux positions d'indexation de deux dits étages (10) est apte à modifier la composition de chacun desdits postes d'usinage (2), ledit centre d'usinage (100) comportant, parmi lesdits étages (10), au moins un premier étage (30) et un deuxième étage (40) qui sont superposés et adjacents, dont au moins l'un desdits premier étage (30) et deuxième étage (40) est mobile par rapport à ladite embase fixe (60), ledit premier étage (30) et ledit deuxième étage (40) étant agencés de façon à ce que, dans toute position relative d'indexation dudit premier étage (30) par rapport audit deuxième étage (40), chaque dit poste d'usinage (2) constitué dans cette indexation comporte au moins une dite unité d'usinage (3) appartenant à l'un desdits premier étage (30) et deuxième étage (40) adjacents, et au moins un dit préhenseur (4) appartenant à l'autre desdits premier étage (30) et deuxième étage (40) adjacents, chaque dit préhenseur (4) a au moins un degré de liberté en rotation par rapport à l'étage qui le porte,
ledit centre d'usinage étant **caractérisé en ce qu'**au moins une dite station (50) comporte à la fois au moins une dite unité d'usinage (3) et au moins un dit préhenseur (4).

2. Centre d'usinage (100) selon la revendication 1, **caractérisé en ce que**, dans chaque dit étage (10) comportant au moins un dit préhenseur (4), au moins un dit préhenseur (4) a au moins deux degrés de liberté en rotation par rapport audit étage (10) qui le porte.

3. Centre d'usinage (100) selon la revendication 1 ou 2, **caractérisé en ce que** au moins un mouvement relatif entre deux positions d'indexation de deux dits étages (10) est apte à modifier la composition de chacun desdits postes d'usinage (2) pour obtenir au moins deux compositions distinctes desdits postes d'usinage (2).

4. Centre d'usinage (100) selon l'une des revendications 1 à 3, **caractérisé en ce qu'**au moins ledit premier étage (30) et ledit deuxième étage (40) sont chacun mobile par rapport à ladite embase fixe (60).

5. Centre d'usinage (100) selon l'une des revendications 1 à 4, **caractérisé en ce que**, dans au moins un dit étage (10), au moins une dite unité d'usinage (3) est mobile en position par rapport à l'étage (10) qui la porte.

6. Centre d'usinage (100) selon la revendication 5, **caractérisé en ce que**, dans au moins un dit étage (10), chaque dite unité d'usinage (3) est mobile en position par rapport à l'étage (10) qui la porte.

7. Centre d'usinage (100) selon l'une des revendications 1 à 6, **caractérisé en ce que**, dans au moins un dit étage (10), au moins un dit préhenseur (4) est mobile en position par rapport à l'étage (10) qui le porte.

8. Centre d'usinage (100) selon la revendication 7, **caractérisé en ce que**, dans au moins un dit étage (10), chaque dit préhenseur (4) est mobile en position par rapport à l'étage (10) qui le porte.

9. Centre d'usinage (100) selon l'une des revendications 1 à 8, **caractérisé en ce que** chaque dit préhenseur (4) a au moins deux degrés de liberté en rotation par rapport audit étage (10) qui le porte.

10. Centre d'usinage (100) selon l'une des revendications 1 à 9, **caractérisé en ce qu'**au moins une dite station (50) comporte plusieurs dites unités d'usinage (3) dont les courses se recouvrent, et **en ce que** lesdits moyens de pilotage (90) sont agencés pour piloter chacune d'entre elles de façon à éviter toute collision avec les autres et les outils qu'elles portent.

11. Centre d'usinage (100) selon la revendication 10, **caractérisé en ce que**, dans ladite au moins une dite station (50) comportant plusieurs dites unités d'usinage (3) dont les courses se recouvrent, certaines desdites unités d'usinage (3) sont indépendantes les unes des autres.

12. Centre d'usinage (100) selon la revendication 10, **caractérisé en ce que**, dans ladite au moins une dite station (50) comportant plusieurs dites unités d'usinage (3) dont les courses se recouvrent, plusieurs dites unités d'usinage (3) utilisent les mêmes guidages.

13. Centre d'usinage (100) selon l'une des revendications 1 à 12, **caractérisé en ce que** ledit centre d'usinage (100) comporte, en plus desdits postes d'usinage (2), au moins une station d'automation (6) pour le chargement ou le déchargement de composants à usiner ou usinés.

14. Centre d'usinage (100) selon la revendication 13, **caractérisé en ce qu'**au moins une dite station d'automation (6) constitue un desdits étages (10).

15. Centre d'usinage (100) selon la revendication 14, **caractérisé en ce qu'**au moins une dite station d'automation (6) est un étage (10) mobile par rapport à ladite embase fixe (60).

16. Centre d'usinage (100) selon l'une des revendications 1 à 15, **caractérisé en ce que** lesdits moyens de pilotage (90) sont agencés pour piloter lesdites stations (50) de façon à faire passer successivement chaque dite unité d'usinage (3) et/ou chaque dit préhenseur (4) devant un point fixe au voisinage d'une embase fixe (60) que comporte ledit centre d'usinage (100).

17. Centre d'usinage (100) selon l'une des revendications 1 à 16, **caractérisé en ce que** ledit centre d'usinage (100) comporte au moins une station de diamantage (8) agencée pour procéder en temps masqué au diamantage de meules ou d'outils portés par une des dites unités d'usinage (3).

18. Centre d'usinage (100) selon la revendication 17, **caractérisé en ce que** ladite station de diamantage (8) est distincte desdites unités d'usinage (3).

19. Centre d'usinage (100) selon l'une des revendications 1 à 18, **caractérisé en ce que** ledit centre d'usinage (100) comporte au moins une station d'usinage à l'outil diamant agencée pour diamanter une pièce maintenue dans un dit préhenseur (4).

20. Centre d'usinage (100) selon l'une des revendications 1 à 19, **caractérisé en ce que** ledit centre d'usinage (100) comporte au moins une station de changement d'outil (9) agencée pour procéder en temps masqué à l'échange de meules ou d'outils portés par une des dites unités d'usinage (3).

21. Centre d'usinage (100) selon la revendication 20, **caractérisé en ce que** ladite station de changement d'outil (9) est distincte desdites unités d'usinage (3).

22. Centre d'usinage (100) selon la revendication 19 ou 20, **caractérisé en ce que** ladite station de changement d'outil (9) est agencée pour coopérer avec un magasin d'outils (80), que comporte ledit centre d'usinage (100), et qui constitue un desdits étages (10).

23. Centre d'usinage (100) selon la revendication 22, **caractérisé en ce que** ladite station de changement d'outil (9) est un étage (10) mobile par rapport à ladite embase fixe (60).

24. Centre d'usinage (100) selon l'une des revendications 1 à 23, **caractérisé en ce qu'**au moins une dite unité d'usinage (3) comporte au moins un outil fixe (341) et est agencée pour coopérer avec au moins un dit préhenseur (4) d'un étage adjacent au sien, lequel au moins un préhenseur (4) est mobile selon au moins un degré de liberté par rapport à la station (50) qui le porte.

25. Centre d'usinage (100) selon l'une des revendications 1 à 24, **caractérisé en ce qu'**au moins un dit préhenseur (4) comporte au moins une broche (401) pour l'entraînement d'un composant à usiner à sa vitesse d'usinage.

26. Centre d'usinage (100) selon l'une des revendications 1 à 25, **caractérisé en ce qu'**au moins un dit préhenseur (4) comporte au moins une pince (402) pour le maintien avec serrage d'un composant à usiner pour autoriser son usinage recto-verso.

27. Centre d'usinage (100) selon l'une des revendications 1 à 26, **caractérisé en ce qu'**au moins une dite unité d'usinage (3) comporte une pluralité de broches (401 ; 402) aptes à l'usinage d'un même composant fixé sur un dit préhenseur (4) avec minimisation du temps de changement d'outil.

28. Centre d'usinage (100) selon l'une des revendications 1 à 27, **caractérisé en ce que** ledit centre d'usinage (100) comporte, en plus desdits postes d'usinage (2), au moins une station de contrôle (11) pour le contrôle géométrique des composants usinés et/ou des outils utilisés.

29. Centre d'usinage (100) selon la revendication 28, **caractérisé en ce que** ladite station de contrôle (11) constitue un desdits étages (10).

30. Centre d'usinage (100) selon la revendication 29, **caractérisé en ce que** ladite station de contrôle (11) est un étage (10) mobile par rapport à ladite embase fixe (60).

31. Centre d'usinage (100) selon l'une des revendications 1 à 30, **caractérisé en ce que** lesdits moyens de pilotage (90) sont agencés pour corriger les trajectoires et/ou les correcteurs dynamiques d'outils.

32. Centre d'usinage (100) selon l'une des revendications 1 à 31, **caractérisé en ce que** ledit centre d'usinage (100) comporte au moins une centrale de lubrification et de filtration apte à filtrer les résidus de rectification, de diamantage et de satinage.

33. Centre d'usinage (100) selon l'une des revendications 1 à 32, **caractérisé en ce que** lesdits étages (10) qui sont mobiles par rapport à ladite embase fixe (60) sont mobiles en rotation coaxiale autour d'un axe unique.

34. Centre d'usinage (100) selon la revendication 33, **caractérisé en ce que** ledit axe unique est vertical.

## Patentansprüche

1. Bearbeitungszentrum (100) für Uhrenkomponenten in mittelgroßen Serien, aufweisend eine feste Basis (60), auf der mehrere Etagen (10) koaxial übereinanderliegen, wovon mindestens eine im Verhältnis zu der festen Basis (60) beweglich ist und wovon jede im Verhältnis zu der festen Basis (60) bewegliche Etage (10) im Verhältnis zu der festen Basis (60) positionsindexierbar ist, wobei jede Etage (10) auf ihrem Umfang eine Vielzahl unterschiedlicher Stationen (50) aufweist, die gemäß einem konstanten Teilungswinkel angeordnet sind, wobei die Stationen (50) Bearbeitungseinheiten (3) und/oder Greifer (4) aufweisen, deren Bewegungen von Steuerungsmitteln (90) gesteuert werden, wobei das Bearbeitungszentrum (100) eine Vielzahl von Bearbeitungsposten (2) aufweist, der jeder aus einer Kombination aus Stationen (50) von zwei benachbarten Etagen (10) besteht, wobei jeder Bearbeitungsposten (2) zum einen mindestens eine Bearbeitungseinheit (3) einer Station (50) von einer der benachbarten Etagen (10) und zum anderen mindestens einen Greifer (4) von einer anderen Station (50) der anderen der benachbarten Etagen (10) kombiniert und wobei jede relative Bewegung zwischen zwei Indexierungspositionen von zwei Etagen (10) imstande ist, die Zusammensetzung von jedem der Bearbeitungsposten (2) zu verändern, wobei das Bearbeitungszentrum (100) unter den Etagen (10) mindestens eine erste Etage (30) und eine zweite Etage (40) aufweist, die übereinanderliegen und benachbart sind, von denen mindestens eine von der ersten Etage (30) und zweiten Etage (40) im Verhältnis zu der festen Basis (60) beweglich ist, wobei die erste Etage (30) und die zweite Etage (40) derart eingerichtet sind, dass in jeder relativen Indexierungsposition der ersten Etage (30) im Verhältnis zu der zweiten Etage (40) jeder Bearbeitungsposten (2), der in dieser Indexierung gebildet ist, mindestens eine Bearbeitungseinheit (3) aufweist, die zu einer von der benachbarten ersten Etage (30) und zweiten Etage (40) gehört und mindestens ein Greifer (4) zu der anderen von der benachbarten ersten Etage (30) und zweiten Etage (40) gehört, wobei jeder Greifer (4) mindestens einen Rotationsfreiheitsgrad im Verhältnis zu der Etage hat, die ihn trägt, wobei das Bearbeitungszentrum **dadurch gekennzeichnet ist, dass** mindestens eine Station (50) gleichzeitig mindestens eine Bearbeitungseinheit (3) und mindestens einen Greifer (4) aufweist.

2. Bearbeitungszentrum (100) nach Anspruch 1, **dadurch gekennzeichnet, dass** in jeder Etage (10), die mindestens einen Greifer (4) aufweist, mindestens ein Greifer (4) mindestens zwei Rotationsfreiheitsgrade im Verhältnis zu der Etage (10) hat, die ihn trägt.

3. Bearbeitungszentrum (100) nach Anspruch 1 oder 2, **dadurch gekennzeichnet, dass** mindestens eine relative Bewegung zwischen zwei Indexierungspositionen von zwei Etagen (10) imstande ist, die Zusammensetzung von jedem der Bearbeitungsposten (2) zu verändern, um mindestens zwei unterschiedliche Zusammensetzungen der Bearbeitungsposten (2) zu erhalten.

4. Bearbeitungszentrum (100) nach einem der Ansprüche 1 bis 3, **dadurch gekennzeichnet, dass** mindestens die erste Etage (30) und die zweite Etage (40) jeweils im Verhältnis zu der festen Basis (60) beweglich sind.

5. Bearbeitungszentrum (100) nach einem der Ansprüche 1 bis 4, **dadurch gekennzeichnet, dass** auf mindestens einer Etage (10) mindestens eine Bearbeitungseinheit (3) im Verhältnis zu der Etage (10) positionsbeweglich ist, die sie trägt.

6. Bearbeitungszentrum (100) nach Anspruch 5, **dadurch gekennzeichnet, dass** auf mindestens einer Etage (10) jede Bearbeitungseinheit (3) im Verhältnis zu der Etage (10) positionsbeweglich ist, die sie trägt.

7. Bearbeitungszentrum (100) nach einem der Ansprüche 1 bis 6, **dadurch gekennzeichnet, dass** auf mindestens einer Etage (10) mindestens ein Greifer (4) im Verhältnis zu der Etage (10) positionsbeweglich ist, die ihn trägt.

8. Bearbeitungszentrum (100) nach Anspruch 7, **dadurch gekennzeichnet, dass** auf mindestens einer Etage (10) jeder Greifer (4) im Verhältnis zu der Etage (10) positionsbeweglich ist, die ihn trägt.

9. Bearbeitungszentrum (100) nach einem der Ansprüche 1 bis 8, **dadurch gekennzeichnet, dass** jeder Greifer (4) mindestens zwei Rotationsfreiheitsgrade im Verhältnis zu der Etage (10) hat, die ihn trägt.

10. Bearbeitungszentrum (100) nach einem der Ansprüche 1 bis 9, **dadurch gekennzeichnet, dass** mindestens eine Station (50) mehrere Bearbeitungseinheiten (3) aufweist, deren Wege sich überschneiden, und dass die Steuerungsmittel (90) eingerichtet sind, um jede von ihnen derart zu steuern, dass jede Kollision mit den anderen und den Werkzeugen vermieden wird, die sie tragen.

11. Bearbeitungszentrum (100) nach Anspruch 10, **dadurch gekennzeichnet, dass** in der mindestens einen Station (50), die mehrere Bearbeitungseinheiten (3) trägt, deren Wege sich überschneiden, einige Bearbeitungseinheiten (3) voneinander unabhängig sind.

12. Bearbeitungszentrum (100) nach Anspruch 11, **dadurch gekennzeichnet, dass** in der mindestens einen Station (50), die mehrere Bearbeitungseinheiten (3) trägt, deren Wege sich überschneiden, mehrere Bearbeitungseinheiten (3) dieselben Führungen verwenden.

13. Bearbeitungszentrum (100) nach einem der Ansprüche 1 bis 12, **dadurch gekennzeichnet, dass** das Bearbeitungszentrum (100) zusätzlich zu den Bearbeitungsposten (2) mindestens eine Automatisierungsstation (6) für das Beladen mit zu bearbeitenden oder das Entladen von bearbeiteten Komponenten aufweist.

14. Bearbeitungszentrum (100) nach Anspruch 13, **dadurch gekennzeichnet, dass** mindestens eine Automatisierungsstation (6) eine der Etagen (10) bildet.

15. Bearbeitungszentrum (100) nach Anspruch 14, **dadurch gekennzeichnet, dass** mindestens eine Automatisierungsstation (6) eine im Verhältnis zu der festen Basis (60) bewegliche Etage (10) ist.

16. Bearbeitungszentrum (100) nach einem der Ansprüche 1 bis 15, **dadurch gekennzeichnet, dass** die Steuerungsmittel (90) eingerichtet sind, um die Stationen (50) derart zu steuern, dass nacheinander jede Bearbeitungseinheit (3) und/oder jeder Greifer (4) vor einen festen Punkt in der Nähe einer festen Basis (60), die das Bearbeitungszentrum (100) aufweist, wechselt.

17. Bearbeitungszentrum (100) nach einem der Ansprüche 1 bis 16, **dadurch gekennzeichnet, dass** das Bearbeitungszentrum (100) mindestens eine Feinschliffstation (8) aufweist, die eingerichtet ist, um Schleifscheiben oder Werkzeuge, die von einer der Bearbeitungseinheiten (3) getragen werden, zeitparallel feinzuschleifen.

18. Bearbeitungszentrum (100) nach Anspruch 17, **dadurch gekennzeichnet, dass** sich die Feinschliffstation (8) von den anderen Bearbeitungseinheiten (3) unterscheidet.

19. Bearbeitungszentrum (100) nach einem der Ansprüche 1 bis 18, **dadurch gekennzeichnet, dass** das Bearbeitungszentrum (100) mindestens eine Diamantwerkzeug-Bearbeitungsstation aufweist, die eingerichtet ist, um ein Teil feinzuschleifen, das in einem Greifer (4) gehalten wird.

20. Bearbeitungszentrum (100) nach einem der Ansprüche 1 bis 19, **dadurch gekennzeichnet, dass** das Bearbeitungszentrum (100) mindestens eine Werkzeugwechselstation (9) aufweist, die eingerichtet ist, um das Wechseln von Schleifscheiben und Werkzeugen, die von einer der Bearbeitungseinheiten (3) gehalten werden, zeitparallel durchzuführen.

21. Bearbeitungszentrum (100) nach Anspruch 20, **dadurch gekennzeichnet, dass** sich die Werkzeugwechselstation (9) von den Bearbeitungseinheiten (3) unterscheidet.

22. Bearbeitungszentrum (100) nach Anspruch 19 oder 20, **dadurch gekennzeichnet, dass** die Werkzeugwechselstation (9) eingerichtet ist, um mit einem Werkzeugmagazin (80) zusammenzuwirken, welches das Bearbeitungszentrum (100) aufweist und das eine der Etagen (10) bildet.

23. Bearbeitungszentrum (100) nach Anspruch 22, **dadurch gekennzeichnet, dass** die Werkzeugwechselstation (9) eine im Verhältnis zu der festen Basis (60) bewegliche Etage (10) ist.

24. Bearbeitungszentrum (100) nach einem der Ansprüche 1 bis 23, **dadurch gekennzeichnet, dass** mindestens eine Bearbeitungseinheit (3) mindestens ein festes Werkzeug (341) aufweist und eingerichtet ist, um mit mindestens einem Greifer (4) einer zu der Seinen benachbarten Etage zusammenzuwirken, wobei der mindestens eine Greifer (4) gemäß mindestens einem Freiheitsgrad im Verhältnis zu der Station (50) beweglich ist, die ihn trägt.

25. Bearbeitungszentrum (100) nach einem der Ansprüche 1 bis 24, **dadurch gekennzeichnet, dass** mindestens ein Greifer (4) mindestens eine Spindel (401) für den Antrieb einer zu bearbeitenden Komponente in ihrer Bearbeitungsgeschwindigkeit aufweist.

26. Bearbeitungszentrum (100) nach einem der Ansprüche 1 bis 25, **dadurch gekennzeichnet, dass** mindestens ein Greifer (4) mindestens eine Zange (402) zum gespannten Halten einer zu bearbeitenden Komponente aufweist, um deren Bearbeitung vorn und hinten zu gestatten.

27. Bearbeitungszentrum (100) nach einem der Ansprüche 1 bis 26, **dadurch gekennzeichnet, dass** mindestens eine Bearbeitungseinheit (3) eine Vielzahl von Spindeln (401; 402) aufweist, die zur Bearbeitung derselben Komponente, die auf einem Greifer (4) befestigt ist, mit Minimierung der Werkzeugwechselzeit imstande sind.

28. Bearbeitungszentrum (100) nach einem der Ansprüche 1 bis 27, **dadurch gekennzeichnet, dass** das Bearbeitungszentrum (100) zusätzlich zu den Bearbeitungsposten (2) mindestens eine Kontrollstation (11) für die geometrische Kontrolle der bearbeiteten Komponenten und/oder der verwendeten Werkzeuge aufweist.

29. Bearbeitungszentrum (100) nach Anspruch 28, **dadurch gekennzeichnet, dass** die Kontrollstation (11) eine der Etagen (10) bildet.

30. Bearbeitungszentrum (100) nach Anspruch 29, **dadurch gekennzeichnet, dass** die Kontrollstation (11) eine im Verhältnis zu der festen Basis (60) bewegliche Etage (10) ist.

31. Bearbeitungszentrum (100) nach einem der Ansprüche 1 bis 30, **dadurch gekennzeichnet, dass** die Steuerungsmittel (90) eingerichtet sind, um die Bahnen und/oder die dynamischen Werkzeugkorrektoren zu korrigieren.

32. Bearbeitungszentrum (100) nach einem der Ansprüche 1 bis 31, **dadurch gekennzeichnet, dass** das Bearbeitungszentrum (100) mindestens eine Schmier- und Filterzentrale aufweist, die imstande ist, die Schleif-, Feinschleif- und Satinierungsrückstände zu filtern.

33. Bearbeitungszentrum (100) nach einem der Ansprüche 1 bis 32, **dadurch gekennzeichnet, dass** die Etagen (10), die im Verhältnis zu der festen Basis (60) beweglich sind, um eine einzige Achse koaxial rotationsbeweglich sind.

34. Bearbeitungszentrum (100) nach Anspruch 33, **dadurch gekennzeichnet, dass** die einzige Achse vertikal ist.

## Claims

1. Machining centre (100) for timepiece components in medium-sized production runs, including a fixed base (60), on which are coaxially superposed several stages (10), at least one of which is movable relative to said fixed base (60), and wherein each said stage (10) movable relative to said fixed base (60) can be position indexed with respect to said fixed base (60), each said stage (10) including, on the periphery thereof, a plurality of distinct stations (50) arranged at a constant angular pitch, said stations (50) including machining units (3) and/or grippers (4) whose movements are controlled by control means (90), said machining centre (100) including a plurality of machining locations (2) each formed by a combination of said stations (50) from two adjacent said stages (10), each said machining location (2) combining, on the one hand, at least one said machining unit (3) of a said station (50) of one of said adjacent stages (10), and on the other hand, at least one gripper (4) of another said station (50) of the other of said adjacent stages (10), and wherein each relative movement between two indexing positions of two said stages (10) is able to change the composition of each of said machining locations (2), said machining centre including (100), among said stages (10), at least a first stage (30) and a second stage (40) which are superposed and adjacent, wherein at least one of said first stage (30) and second stage (40) is movable relative to said fixed base (60), said first stage (30) and said second stage (40) being arranged such that, in any relative indexing position of said first stage (30) with respect to said second stage (40), each said machining location (2) formed in this indexing operation includes at least one said machining unit (3) belonging to one of said adjacent first stage (30) and second stage (40), and at least one said gripper (4) belonging to the other of said adjacent first stage (30) and second stage (40), **characterized in that** each said gripper (4) has at least one rotational degree of freedom relative to the stage that carries said gripper, and **in that** at least one said station (50) includes both at least one said machining unit (3) and at least one said gripper (4).

2. Machining centre (100) according to claim 1, **characterized in that**, in each said stage (10) including at least one said gripper (4), at least one said gripper (4) has at least two rotational degrees of freedom relative to said stage (10) that carries said gripper.

3. Machining centre (100) according to claim 1, **characterized in that** at least one relative movement between two indexing positions of two said stages (10) is able to change the composition of each of said machining locations (2) to obtain at least two distinct compositions of said machining locations (2).

4. Machining centre (100) according to claim 1, **characterized in that** at least said first stage (30) and said second stage (40) are each movable relative to said fixed base (60).

5. Machining centre (100) according to claim 1, **characterized in that**, in at least one said stage (10), the position of at least one said machining unit (3) is movable relative to the stage (10) that carries said machining unit.

6. Machining centre (100) according to claim 5, **characterized in that**, in at least one said stage (10), the position of each said machining unit (3) is movable relative to the stage (10) that carries said machining unit.

7. Machining centre (100) according to claim 1, **characterized in that**, in at least one said stage (10), the position of at least one said gripper (4) is movable relative to the stage (10) that carries said gripper.

8. Machining centre (100) according to claim 7, **characterized in that**, in at least one said stage (10), the position of each said gripper (4) is movable relative to the stage (10) that carries said gripper.

9. Machining centre (100) according to claim 1, **characterized in that**, each said gripper (4) has at least two rotational degrees of freedom relative to said stage (10) that carries said gripper.

10. Machining centre (100) according to claim 1, **characterized in that** at least one said station (50) includes several said machining units (3) whose strokes overlap, and **in that** said control means (90) are arranged to control each said unit to prevent any collision with the other units and the tools carried thereby.

11. Machining centre (100) according to claim 10, **characterized in that**, in said at least one said station (50) including several said machining units (3) whose strokes overlap, some of said machining units (3) are independent of each other.

12. Machining centre (100) according to claim 10, **characterized in that**, in said at least one said station (50) including several said machining units (3) whose strokes overlap, several of said machining units (3) use the same guide members.

13. Machining centre (100) according to claim 1, **characterized in that** said machining centre (100) includes, in addition to said machining locations (2), at least one automation station (6) for loading or unloading components to be machined or machined components.

14. Machining centre (100) according to claim 13, **characterized in that** at least one said automation station (6) forms one of said stages (10).

15. Machining centre (100) according to claim 14, **characterized in that** at least one said automation station (6) is a movable stage (10) relative to said fixed base (60).

16. Machining centre (100) according to claim 1, **characterized in that** said control means (90) are arranged to control said stations (50) such that each said machining unit (3) and/or each said gripper (4) passes in succession before a fixed point in proximity to a fixed base (60) of said machining centre (100).

17. Machining centre (100) according to claim 1, **characterized in that**, said machining centre (100) includes at least one dressing station (8), which is arranged to perform, in concurrent operation time, the dressing of grinding wheels or tools carried by one of said machining units (3).

18. Machining centre (100) according to claim 17, **characterized in that** said dressing station (8) is distinct from said machining units (3).

19. Machining centre (100) according to claim 1, **characterized in that** said machining centre (100) includes at least one diamond machining station arranged for diamond polishing a workpiece held in a said gripper (4).

20. Machining centre (100) according to claim 1, **characterized in that** said machining centre (100) includes at least one tool changing station (9) arranged to change, in concurrent operation time, grinding wheels or tools carried by one of said machining units (3).

21. Machining centre (100) according to claim 20, **characterized in that** said tool changing station (9) is distinct from said machining units (3).

22. Machining centre (100) according to claim 19, **characterized in that** said tool changing station (9) is arranged to cooperate with a tool magazine (80) comprised in said machining centre (100), and which forms one of said stages (10).

23. Machining centre (100) according to claim 22, **characterized in that** said tool changing station (9) is a movable stage (10) relative to said fixed base (60).

24. Machining centre (100) according to claim 1, **characterized in that** at least one said machining unit (3) includes at least one fixed tool (341) and is arranged to cooperate with at least one said gripper (4) of a stage adjacent to the stage thereof, which at least one gripper (4) is movable in a least one degree of freedom relative to the station (50) that carries said gripper.

25. Machining centre (100) according to claim 1, **characterized in that** at least one said gripper (4) includes at least one spindle (401) for driving a component to be machined at its machining speed.

26. Machining centre (100) according to claim 1, **characterized in that** at least one said gripper (4) includes at least one clamp (402) for clamping a component to be machined to allow machining of both sides of said component.

27. Machining centre (100) according to claim 1, **characterized in that** at least one said machining unit (3) includes a plurality of spindles (401; 402) capable of machining the same component attached to a gripper (4) while minimizing the tool change time.

28. Machining centre (100) according to claim 1, **characterized in that** said machining centre (100) includes, in addition to said machining locations (2), at least one checking station (11) for checking the geometry of the machined components and/or of the tools used.

29. Machining centre (100) according to claim 28, **characterized in that** said checking station (11) forms one of said machining units (10).

30. Machining centre (100) according to claim 29, **characterized in that** said checking station (11) is a movable stage (10) relative to said fixed base (60).

31. Machining centre (100) according to claim 1, **characterized in that** said control means (90) are arranged to correct the tool paths and/or dynamic tool correctors.

32. Machining centre (100) according to claim 1, **characterized in that** said machining centre (100) includes at least one lubrication and filtering centre capable of filtering the residues from grinding, diamond polishing and satin finishing processes.

33. Machining centre (100) according to claim 1, **characterized in that** said stages (10) which are movable relative to said fixed base (60) are movable in coaxial rotation about a single axis.

34. Machining centre (100) according to claim 33, **characterized in that** said single axis is vertical.
